# EUROPEAN PATENT APPLICATION

(11) **EP 4 005 398 A2**
(43) Date of publication of application: **01.06.2022**
(21) Application number: 21206589.0
(22) Date of filing: 05.11.2021
(51) Int. Cl.: A23L 5/20, A23L 5/30, A23L 7/104, A23L 7/10, A23L 2/38, A23L 2/52, A23L 2/84

(54) **INSTANT COLLOIDAL WHOLE OAT FLOUR APPLICATIONS**

(30) Priority: 06.11.2020 FI 20206115
(71) Applicant: Polar Glucan Oy, 00990 Helsinki (FI)
(72) Inventor: AWADH, Jamila, 00990 Helsinki (FI); LEHTOMÄKI, Ilkka, 00990 Helsinki (FI); MYLLYMÄKI, Olavi, 00990 Helsinki (FI)
(74) Representative: Laine IP Oy

(57) **Abstract**

According to an example aspect of the present invention, there is provided food applications comprising instant colloidal whole oat flour that is dry mixed with natural or microbial enzymes and the mixture is hydrolysable in cold conditions, or as a structural component without enzymes, and use of instant colloidal whole oat flour for drying of syrups.

## Description

### FIELD

The present invention relates to food applications using instant colloidal whole oat flour (ICWOF), which is cold soluble extruded fine milled whole oat flour according to EP2548448. Such applications comprise of, for example: a) oat drinks from ICWOF and its applications in for example yoghurt, ice cream and baking, b) instant oat powder from ICWOF and its applications in drinks and dry yoghurt, c) oat spread with ICWOF, d) soups and dry soup powders with ICWOF, e) oat desserts and fillings with ICWOF, f) drying of berry and fruit juice concentrates and honey and other syrups with ICWOF and e) creamy milk with ICWOF.

### BACKGROUND

State of the art oat drinks are typically produced through enzymatic process, where healthy oat fibre and part of protein component are fractioned away to reach white oat drink. Sometimes external nutritional components, such as fibres and proteins, are added back into the drinks. Microbial enzymes are used in the production to hydrolyse starch and beta glucan. For example, the following patents as US 5,686,123; US 6,451,369; US 6,592,914 and US 9,743,684 are discussing these known solutions.

However, at the present time there is no oat drink available, where natural enzyme active malt extract is used for hydrolysing both starch and beta glucan. In addition, there is no oat drink available, where natural oat beta glucan is used to create the mouthfeel. Instead, external hydrocolloids such as carrageenan, xanthan or gellan gum are used to create the mouthfeel.

Oat drinks are also used as a base material for many foods, such as other drinks, yoghurts, ice cream and spreads. They are also used with barista coffees, in baking etc.

Available oat drink powders contain only a small level of oats to avoid high viscosity in water suspension, which is caused by oat beta glucan and oat starch. Beta glucan causes high viscosity already as quite cold conditions while it solubilises. Starch does not cause high viscosity as cold, because it is in crystallised form, when it is native. In heating the starch crystals break, which increases viscosity of water suspension. When the starch component is pre-cooked, the viscosity of water suspension will be high already in cold conditions. The phenomenon limits the usage of current oat powders.

However, at the present time there is no oat powder, where the starch and beta glucan components are cold soluble and are available for the enzymes and where microbial enzymes are mixed into the dry oat powder for hydrolysing both beta glucan and starch to decrease the viscosity. There is neither oat powder, where natural enzyme active (diastatic) malt extract is mixed into the dry oat powder for hydrolysing both beta glucan and starch to decrease the viscosity, when mixed with water. Natural enzyme active malt extract is generally used to produce malt syrups and in drink processes to create the required taste and structure.

There is neither spread available that contains whole oat flour, only vegetable ingredients and which has non-sandy mouthfeel. For example, Nutella spread contains palm oil, nuts and animal ingredients.

Existing soup or dry soup powders are thickened by starches, modified starches or hydrocolloids or mixed with maltodextrin. There does not exist soup or dry soup powder that is thickened with natural easy-used whole oat flour or maltodextrin is replaced by whole oat flour.

Neither are there simple oat desserts available that are produced from whole oat flour and fruit or berry juice concentrates or honey or other syrups.

It is advantageous to produce dry freely flowing flours from syrups, honey and corresponding products. In dry form the viscosity problem of syrups is solved, handling and logistics are easier, shelf life is extended and the bioactive compounds are more efficiently preserved in dry conditions. Production of dry flour from concentrated juice syrups, honey and corresponding materials is difficult, because they contain high level of acids and sugars with low glass transition temperature (Tg) like invert sugars. Glass transition temperature of fructose is 10 °C and glucose 36 °C. Fructose is naturally not flour, but viscoelastic mass at over 10 °C. Sugar-rich flours may be hygroscopic, which makes them difficult to handle and store. The three types of drying methods in producing sugar-rich flours are usually spray drying, vacuum drying and freeze drying (Nurhadi B, 2016).

One way to increase the glass transition temperature of a material is to dry it with a filler such as maltodextrin or starch or gum Arabic according to Samborska K. (2015). Maltodextrin is generally used as a drying filler in spray drying of honey, juice syrups and corresponding products. Gum Arabic is an expensive ingredient, which limits its usage.

Nurhadi B (2016) studied maltodextrin in vacuum drying of honey. He also studied the addition of anticaking agents to the powder. According to him maltodextrin is normally used more than 50%. Proteins like whey protein isolate, casein and gelatin are also used as fillers. Whole oat flour is not used in the drying of syrups.

Furthermore, there exists no product, where cream texture of milk is created with whole oat flour.

Thus, there is a need for technology of using whole oat flour for solving the above mentioned disadvantages and drawbacks existing in the available food applications.

### SUMMARY OF THE INVENTION

The invention is defined by the features of the independent claims. Some specific embodiments are defined in the dependent claims.

According to a first aspect of the present invention, there is provided food applications comprising of instant colloidal whole oat flour that is dry mixed with natural malt enzymes or microbial enzymes and the mixture is hydrolysable in cold enzyme hydrolysis.

According to a second aspect of the present invention, there is provided food applications comprising instant colloidal whole oat flour as a structural component, without enzymes.

These and other aspects, together with the advantages thereof over known solutions are achieved by the present invention, as hereinafter described and claimed.

The food application with enzymes of the present invention is mainly characterized by what is stated in claim 1.

The food application without enzymes of the present invention is mainly characterized by what is stated in claim 9.

Considerable advantages are obtained by means of the invention. It is for example advantageous to use whole oats and its natural beta glucan for not only its health benefits, but also for creating features such as good mouthfeel and texture to food applications without using external hydrocolloids. In addition, the process for producing food applications with instant colloidal whole oat flour is easy and straightforward to carry out and does not necessarily require wet milling nor other typical machinery used in food industry.

Next, the present technology and further advantages will be described more closely with reference to certain embodiments.

### EMBODIMENTS

The present technology provides novel whole oat flour food applications with the herein described advantages over known and existing solutions. More precisely, the present invention relates to food applications comprising ICWOF that is dry mixed with enzymes and the mixture is hydrolysable in cold enzyme hydrolysis, or ICWOF as a structural component without enzymes.

Instant colloidal whole oat flour is defined in the European patent EP2548448.

Functional flour fraction is intended to mean the flour fraction, which provides and/or is the main reason behind the functional features that are essential to the hereinafter described food applications, such as cold solubility, small particle size and pleasant mouthfeel.

100% oats herein mean that the flour fraction originates 100% from oats.

Diastatic power is a measure to convert starch to sugars (maltose).

Hot enzyme hydrolysis of oat flour: when oat flour is heated above starch gelatinisation temperature in a water suspension, starch particles will lose their crystalline structure. When the hot suspension also contains enzymes, the enzymes will at the same time hydrolyse the starch component. As a result of this, viscosity that is caused by starch component in hot liquids will disappear. Beta glucan does not have crystalline structure and it can be hydrolysed without heating.

Cold enzyme hydrolysis of oat flour: the starch particles of instant colloidal whole oat flour are not in crystalline structure. When dry instant colloidal whole oat flour is dry mixed with enzymes, the starch component of the flour will rapidly hydrolyse (break) in lukewarm water suspension and the viscosity is kept low all the time. In other words, the flour comprised with enzyme does not require heating over the starch gelatinisation temperature. It is surprising that instant colloidal whole oat flour, where the starch particles are visible EP2548448 (FIG. 3), can break in cold enzyme hydrolysis. The particles have lost their crystallisation. Common assumption is that the starch component in the particles would have been re-crystallised and thus would have prevented cold enzyme hydrolysis.

Cold hydrolysable oat flour: it is dry instant colloidal whole oat flour (EP2548448), which is dry mixed with malt or microbial enzymes. Its moist products have low viscosity in lukewarm suspension because of cold enzyme hydrolysis.

Lukewarm suspension and/or cold enzyme hydrolysis herein means that suspensions comprising dry mixture of ICWOF and enzymes are not heated, in other words they have any temperature below 50 °C, preferably between 10 and 40 °C and most suitably somewhere around room temperature i.e. 20 to 30 °C.

Instant oat powder: it is a mixture of cold hydrolysable oat flour and other ingredients that improve the behaviour of the instant oat powder or the drink (suspension) made from it.

Instant whole oat drink: when cold hydrolysable oat flour or instant oat powder is mixed with lukewarm water, beta glucan and starch are rapidly hydrolysed without heating and viscosity is kept low. The product is instant whole oat drink.
FIGURE 1A describes the process for producing whole oat drink that has long shelf life and pleasant mouthfeel created by beta glucan and soluble starch.
FIGURE 1B describes the cold hydrolysis of cold hydrolysable oat flour in producing whole oat drink or oat suspension for further usage. The product has long shelf life that is achieved by using ultra high temperature treatment (UHT) or pasteurisation. Pleasant mouthfeel is achieved by beta glucan and soluble starch of plain ICWOF, which is added into the suspension after the dry mixed enzymes of the cold hydrolysable oat flour have been destroyed by heat treatment.
FIGURE 1C describes the cold hydrolysis of cold hydrolysable oat flour or instant oat powder for production of instant whole oat drink that has short shelf life or suspension for further usage.
FIGURE 2 describes the process for producing industrial syrup with instant colloidal whole oat flour.

### ICWOF DRY MIXED WITH ENZYMES

### Oat drink from instant colloidal whole oat flour

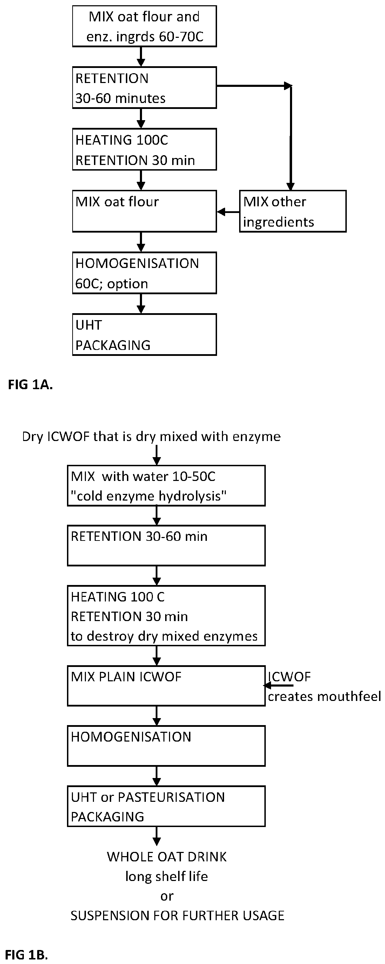

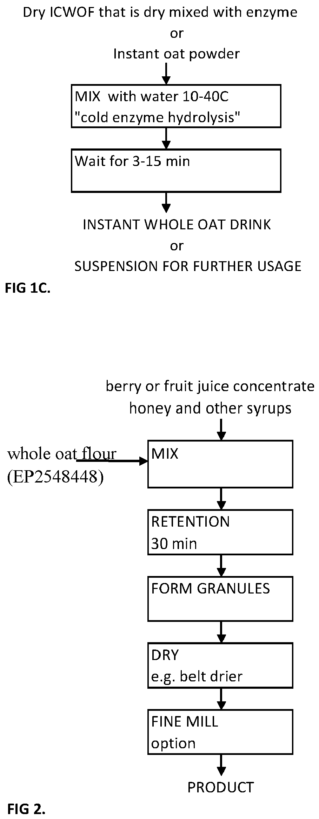

The current oat drink is produced from ICWOF or the dry mixture of it and enzymes. The flour can be rapidly hydrolysed with natural enzyme active malt extract or microbial enzyme such as Novozyme BAN that hydrolyses both starch and breaks beta glucan. The suspended flour does not necessarily require further milling. The corresponding process is straightforward and easy, and described in EXAMPLES 1A, 1B and 1C and in FIGURES 1A, 1B and 1C.

In FIGURE 1A, after hot hydrolysis of starch and beta glucan in 60-70 °C with natural enzyme active malt extract, the water suspension has no viscosity. In the next step, the suspension can be heated to 95-100 °C to destroy the natural enzyme activity. After heating, there are no enzymes anymore to destroy neither beta glucan nor starch. The sedimentation of the drink is slowed down and viscosity (mouthfeel) increased by adding 3-5% ICWOF, which bring natural beta glucan and starch. Final natural oat drink will contain no E-numbers and it is totally a whole grain oat product. The mouth feel is velvet like due to the small particles of whole oat flour.

The previous process is described in EXAMPLE 1A and FIGURE 1A. Other ingredients can also be used according to the target for example dry fine berry or fruit flour, cacao, coffee, dried yoghurt, weak acids, aromas etc. Product can be berry or fruit drink, cacao drink, coffee adjunct and yogurt drink. When protein is added, oat drink can also be a base for protein drink, which applies for elderly, sportsmen and athletics and as a recovery drink. Oat drink can be a base for fermented foods, such as yogurts. Oat drink can be an ingredient in ice cream, baking, cooking etc.

In EXAMPLE 1B and in FIGURE 1B is presented the previous process that uses cold hydrolysis.

ICWOF contains starch, which is not in crystalline form and beta glucan, which is freed from its structure. When enzyme active malt extract or microbial enzyme such as Novozyme BAN is mixed with the dry powder, starch and beta glucan components do not create viscosity, when the mixture is mixed with lukewarm water. It is surprising that the water does not need to be warm, whereby it can be done in ambient temperature. When powder is blended for example 10% with water, a ready non-viscous oat drink is formed. The process is described in EXAMPLE 1C and FIGURE 1C. Other ingredients can be added, if/when needed.

### Instant oat powder from instant colloidal whole oat flour

A dry mixture of instant oat powder is presented in the EXAMPLE 2.
a. Calcium is used as fortifier to simulate cow milk. Instead of insoluble calcium carbonate you can use calcium lactate gluconate, which is soluble, and other tasty calcium sources. The target is to have in the final drink 120 mg calcium per 100g.
b. Enzyme active malt extract hydrolyses both starch and beta glucan component. Malt extract is a natural source of enzymes. For example, Senson (Finland) produces standardised enzyme active malt extracts, which provide the benefit that you can use controlled amount of malt extract every time. For example Senson Maltazyme 1200 can be used 0,1-1%. Otherwise, the effect (diastatic activity) of malt extract ought to be measured and the dosing done accordingly. You can also use Novozyme BAN enzyme, which has both amylase and beta glucanase activity. Novozyme BAN 480L enzyme can be used 0,01-0,1%.
c. Silicate is added to improve flow ability and blending with water.
d. Xanthan retards the long-term sedimentation in the water mixture. Instead of xanthan you can use hydrocolloids such as gellan gum, carrageenan and pectin that are not hydrolysed by amylase enzyme. If the target is to drink the oat drink within 60 minutes, you do not need any hydrocolloid.

Other ingredients can also be used according to the target for example dry fine berry or fruit flour, cacao, coffee, dried yoghurt, weak acids, aromas etc. Product can be berry or fruit powder, cacao powder, coffee adjunct, dry yogurt powder or protein powder etc. The instant oat powder can also be a base for protein drink powder with oats that applies for elderly, sportsmen and athletics and also as recovery drink powder. The instant oat powder with fortification applies also for nutricosmetics. The fortification can be minerals, vitamins, collagen, hyaluronic acid and flavonoids etc. Instant oat powder can also be used as a milk powder extender. At the same time, it assists in saving the environment.

### ICWOF AS A STRUCTURAL COMPONENT

### Oat spread with instant colloidal whole oat flour

When ICWOF is mixed with solid fat and sugar, a sweet spread is created. Cacao flour, aromas like vanilla and lecithin can be added. Other ingredients such as fine berry and fruit ingredients can also be used.

Whole oat flour has small particles, starch in appropriate gelatinised form, protein, fibre and lecithin, all of which assist to make the spread. The product is surprising smooth and does not have sandy mouthfeel. The final spread is tasty, vegetable based and does not necessarily contain nuts.

Oat spread with ICWOF is presented in EXAMPLE 3. Oat spread is simple to produce. It can also be produced in a small scale for example by consumers without chocolate machinery and it still has smooth structure and pleasant mouthfeel.

The solid fat can be any fat the melting point of which is such that it melts in the mouth. Oat spread does not necessarily require lecithin, which secures the structure. The lecithin can be any lecithin used in sweet spreads. The cacao has preferably 20% fat content, because high fat gives better mouthfeel. Instead of cacao fine berry or fruit flours can be used with corresponding aromas. The sugar is fine icing sugar. Aromas can be for example vanilla, fruits, berry etc.

Sugar can be replaced by hydrophilic ingredients that melt in the mouth. Such compounds are fine maltodextrin, fine resistant starches such as Nutriose and fine CMC. When salt and aromas are added, a salty oat spread is created.

A further advantage is that the moisture of spread originates only from dry raw materials and the water activity is very low which increases the shelf life of the product.

### Soup or dry soup powder with instant colloidal whole oat flour

ICWOF can naturally replace starches, hydrocolloids and maltodextrin in soup or dry soup powders. ICWOF naturally contains both starch and hydrocolloid, which both have positive effect on the structure of soup or dry soup powder and can replace external starch and hydrocolloid and maltodextrin.

Both starch and beta glucan component from the ICWOF gives the structure as is described in EXAMPLE 4. The level of ICWOF is 3-7% in the water component of soup or dry soup powder.

Ingredients can be for example vegetables, spices, onions, tomatoes and salt. In the dry soup, dried vegetables can be added and spices to give taste. Mushrooms may break naturally the viscosity of oats due to the high enzyme activity of mushrooms.

### Oat dessert and filling with instant colloidal whole oat flour

ICWOF and syrup create the base for oat dessert or filling. Normally high level of beta glucan will give a long texture. However, long structure of beta glucan can be controlled with acids and with other hydrocolloids such as carrageenan, xanthan, pectin and modified starches. They produce a structure that can be cut.

The concentration of ICWOF is 5-10% (preferably 7%) and the level of fruit or berry syrup is the same. The level of xanthan is 0,5%. Other ingredients can be added, when wanted. The product is spoon-able whole oat dessert. The corresponding example is described in EXAMPLE 5.

### Drying of syrup with instant colloidal whole oat flour

When ICWOF that is cold soluble and fine milled and syrup are mixed together, a mixture can be dried with easy means. Considerable advantages are obtained by means of the invention. It is for example advantageous to produce freely flowing dry flours from concentrated juices, syrups, honey and corresponding products for example enzymes. The viscosity problem of syrups is solved, handling and logistics are easier, shelf life is longer and the bioactive compounds are preserved in the dry conditions. The present invention provides a new natural drying technology, which also produces sugar-rich bioactive flours and natural sweeteners. They also have water activity low enough to prevent microbial growth.

Dry ICWOF absorbs part of the syrup into the material, which is likely due to following features:
a. The oat kernel structures are opened in extrusion and are more efficient in absorption
b. The large surface area of ICWOF enlarges the reaction area
c. The precooked starch has lost its crystal structure and it will absorb syrup efficiently
d. The small starch particles of oats enlarge the reaction area
e. Oat beta glucan absorbs syrup and may act like Arabic gum
f. Dietary fibre absorbs syrup and creates more porous structure for ICWOF
g. Oat protein component absorbs syrup. The small exposed oat protein particles (2-5 um) may be very efficient
h. Oat oil (oat lecithin) acts like an emulsifier and may enhance absorption of syrup.

Industrial drying of syrups with instant colloidal whole oat flour process is described in FIGURE 2. ICWOF acts as a filler that has both starch and hydrocolloid. The moisture of the oat-syrup material, which is to be dried, is 15-35 w-%. The moisture level is low compared to berries, fruits and vegetable, where the moisture level is 70-90 w-%. This characteristic significantly improves the drying process and makes it possible to use efficient continuous machinery and temperature profiles, which protect the taste, colour and bioactive compounds. ICWOF has better nutritional values than maltodextrin. ICWOF and juice syrup is highly soluble in water and can be milled very fine, both features of which give opportunity to use oat-syrup material in moist food applications such as drinks, smoothies, dairy products, soup or dry soup powders, sauces etc. The oat-syrup material applies also in dry applications such as drink powders, baked goods, snacks, cereals, meat applications, spices, confectionaries and sweets. They can also be used as natural colors due to the colorful phenolic components. The bioactive compounds are protected in the dry oat-syrup material, which gives opportunity to use them as nutraceuticals, superfoods and sport food. Oat-syrup material can also be sold such as it is for end-customer's application. The corresponding example is described in EXAMPLE 6 and FIGURE 2.

Many berry and fruit juice concentrates and syrups originated from bilberry, lingonberry, blackcurrant, chokeberry, orange, mango, apple, agave, maple, date, honey etc can be dried with the ICWOF filler.

### Creamy milk with instant colloidal whole oat flour

ICWOF can also be added to milk. The product has surprisingly creamy texture due to beta glucan component. It has fibre that oat cream does not have and less fat than corresponding cream originated from milk.

When ICWOF is added to milk that does not contain lipase activity such as for example ultra-high temperature processed UHT milk, the final texture is surprisingly similar to the texture of cream of milk and the taste is very pleasant. The lipase activity of milk can create off-taste into the product. The milk-oat mixture contains less fat and more fibre as cream of milk. The concentration of ICWOF is 3-5%. The milk-oat mixture can be used in many applications and it is also drinkable. The corresponding example is described in EXAMPLE 7. It can also be fermented to mixture and produce for example Middle East type sour yogurt drink called Hakeen.

Furthermore, although the beta-glucan and starch of ICWOF would be hydrolyzed, there is still some (about 5 wt-%) natural beta-glucan left in all of the above-mentioned food applications. The molecule size of hydrolyzed beta glucan still remains large enough for analysis, which gives opportunity to use health claims in the food applications.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. While the foregoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### EXAMPLES

### EXAMPLE 1A. Whole oat drink that has long shelf life (FIGURE 1A)

Whole grain oat drink without sandy mouthfeel. E-number free oat drink option:
1.Mixing 5-10% ICWOF (EP2548448) and enzyme dry mixture with water.
2.Heating the mixture to 60 °C and let it to stand while mixing for min 30 minutes with malt extract or Novozyme BAN enzyme, which takes away / destroys viscosity
3.Heating the mixture to 100 °C, which destroys the enzyme activities. This can be tested in a laboratory scale by adding ICWOF about 5% into a small sample, the viscosity of which is not decreased.
4.Addition of ICWOF (EP2548448) 3-5%, which gives the drink structure and mouthfeel due to the soluble beta glucan and starch. No external hydrocolloids are needed.
5.Addition of flavours when needed
6.Optional homogenization
7.Heating for final shelf life e.g. pasteurisation or UHT
8.Packaging

Oat drink can be used in many of the cow milk applications. It can replace milk in ice cream, baking etc.

### EXAMPLE 1B. Whole oat drink that is produced using cold hydrolysis and that has long shelf life (FIGURE 1B)

Whole grain oat drink without sandy mouthfeel. E-number free oat drink option:
1. Mixing of 5-10% dry mixture of ICWOF (EP2548448) and enzyme (malt extract or Novozyme BAN) with water of 10-50C
   ▪ Senson malt extract Maltazyme 1200 0,1-1%
   ▪ Novozyme BAN 480 L 0,01-0,1 %
2. Let the suspension stand while mixing for min 30-60 minutes, which takes away / destroys viscosity
3.Heating the mixture to 100 °C, which destroys the enzyme activities. This can be tested in a laboratory scale by adding ICWOF about 5% into a small sample, the viscosity of which is not decreased.
4.Addition of ICWOF (EP2548448) 3-5%, which gives to the drink structure and mouthfeel due to the soluble beta glucan and starch. No external hydrocolloids are needed.
5.Addition of flavours when needed
6.Optional homogenization
7.Heating for final shelf life e.g. pasteurisation or UHT
8.Packaging

The drink or suspension for further usage is ready. It can be used as an option to cow milk in many of the cow milk applications. It can be used in ice cream, baking, smoothies, etc.

### EXAMPLE 1C. Instant whole oat drink that is produced using cold hydrolysis and that has short shelf life (FIGURE 1C)

Whole grain oat drink without sandy mouthfeel. E-number free oat drink option:
1. Mixing of 5-10% dry mixture of ICWOF (EP2548448) and enzyme (malt extract or Novozyme BAN) with water of 10-40C
   ▪ Senson malt extract Maltazyme 1200 0,1-1%
   ▪ Novozyme BAN 480 L 0,01-0,1 %
2.Wait for 3-15 minutes

The drink or suspension for further usage is ready. It can be used as an option to cow milk in many of the cow milk applications. It can be used in ice cream, baking etc., when the short shelf life is noted in the forthcoming processes.

### EXAMPLE 2. Dry mixture of ICWOF and malt enzymes

### Dry mix:

- 93,5% ICWOF (EP2548448)
- Calcium carbonate 3%, when needed to give 120 mg calcium into the drink that is mixed from instant whole oat powder
- Maltazyme 1200 (Senson) 0,5-1%
- Salt 1%, when needed
- Silicate compound 0,5-1%
- Xanthan 0,3-0,7%

When this mixture is blended for example 10% with water, an oat drink that has low viscosity and contains whole grain oats, is produced.

### EXAMPLE 3. Whole oat spread

**The whole oat spread is made according to the sequential operations A-D.**

### A. Mix and heat 60 °C for 30 min:

- 38% Solid Fat
- 1% sun flower lecithin, when needed

### B. Mix when heated:

- 21% ICWOF
- 6,5% cacao 20% fat

### C. Mix when heated:

- 33% sugar
- 1% aroma and other ingredients

### D. Cool and pack

### EXAMPLE 4. Soup or dry soup powder with instant colloidal whole oat flour

The water of soup is replaced with a suspension of water and 4% of ICWOF. The soup is cooked, and it is ready to eat.

The dry soup recipe will contain ICWOF such an amount that the final soup will have about 4% oat flour.

### EXAMPLE 5. Whole oat dessert and filling

- Mix first water and the syrup or puree. Then add dry ingredients.
- Mix efficiently
- Cook, cool and pack
- The spoon-able oat dessert is ready

**Table 1. Examples of whole oat desserts and fillings.**

| Ingredients | Apple juice concentrate 65 brix | Orange juice Concentrate 65 brix | Mango puree 100% |
|---|---|---|---|
| Water | 72% | 72% | 62% |
| Concentrate/puree | 15% | 15% | 20% |
| ICWOF (EP2548448) | 12,5% | 12,5% | 12,5% |
| Icing sugar | - | - | 5% |
| Xanthan | 0,5% | 0,5% | 0,5% |

### EXAMPLE 6. Drying of syrups with instant colloidal whole oat flour

ICWOF and juice concentrates were mixed 1:1. The material was let to stand for at least 30 minutes before it was put on trays and transferred to a drying cabinet. The drying time was 2,5 hour and temperature 95C. The material was turned upside down 3 times during drying period. Dry oat-syrup granule batches were cooled in ambient temperature at normal room relative humidity and milled, when needed. They were packed into plastic bags and closed air tightly.

**Table 2. Nutrition values and recipes relating to different oat-syrup mixture examples.**

| **NUTRITION VALUES** | Wild lingonberry | Wild bilberry | Blackcurrant | Chokeberry | Honey |
|---|---|---|---|---|---|
| Mixture oat / syrup | 50% / 50% | 50% / 50% | 50% / 50% | 50% / 50% | 60% / 40% |
| Moisture | 10,0 | 10,0 | 10,0 | 10,0 | 10,0 |
| Fat | 4,3 | 4,9 | 6,3 | 4,0 | 4,3 |
| Starch and sugar | 70,1 | 68,8 | 64,0 | 71,0 | 69,3 |
| Dietary fiber | 6,3 | 6,3 | 8,7 | 6,3 | 6,8 |
| Protein | 8,1 | 8,3 | 9,2 | 8,1 | 8,9 |
| Ash | 1,2 | 1,7 | 1,7 | 0,6 | 0,7 |
| SUM | 100,0 | 100,0 | 100,0 | 100,0 | 100,0 |
| EnergyJ/100 g | 1 540 | 1 541 | 1 549 | 1 544 | 1 544 |
| Energy kcal/100 g | 368 | 368 | 370 | 369 | 369 |
| Energy from protein | 9 % | 9 % | 10 % | 9 % | 10 % |
| Sugar g/100g | 37,8 | 19,5 | 27,1 | 38,7 | 34,6 |
| Starch g/100 | 32,3 | 49,3 | 36,9 | 32,3 | 34,7 |
| Salt g/100g | 0,10 | 0,02 | 0,00 | 0,00 | 0,01 |
| Potassium mg/100g | 612 | 636 | 813 | 237 | 279 |
| Calsium mg/100g | 47 | 93 | 140 | 24 | 28 |

| **RECIPES** | Wild lingonberry | Wild bilberry | Blackcurrant | Chokeberry | Honey |
|---|---|---|---|---|---|
| Mixture oat / syrup | 50% / 50% | 50% / 50% | 50% / 50% | 50% / 50% | 60% / 40% |
| Whole grain oat support material | 200,0 | 200,0 | 200,0 | 200,0 | 240,0 |
| Wild lingonberry juice conc. 65 brix | 200,0 | 0,0 | 0,0 | 0,0 | 0,0 |
| Wild bilberry juice conc. 65 brix | 0,0 | 200,0 | 0,0 | 0,0 | 0,0 |
| Blackcurrant juice conc. 65 brix | 0,0 | 0,0 | 200,0 | 200,0 | 0,0 |
| Chokeberry juice conc. 65 brix | 0,0 | 0,0 | 0,0 | 0,0 | 0,0 |
| Honey | 0,0 | 0,0 | 0,0 | 0,0 | 160,0 |
| FREE | 0,0 | 0,0 | 0,0 | 0,0 | 0,0 |
| FREE | 0,0 | 0,0 | 0,0 | 0,0 | 0,0 |
| Evaporated water | -53,3 | -51,0 | -53,3 | -53,3 | -12,5 |
| SUM | 347 | 349 | 347 | 347 | 388 |

### EXAMPLE 7. Creamy milk with instant whole oat flour

### Mix:

- 3% ICWOF (EP2548448)
- 97% cow milk with no lipase activity

Stabilise the mixture with pasteurisation or UHT.

### CITATION LIST

### Patent literature:

US 5,686,123
US 6,451,369
US 6,592,914
US 9,743,684
EP 2548448

### Non-patent literature:

Nurhadi, B., Maltodextrin incorporated vacuum dried honey powder: processing and stability, PhD Thesis, Universty College Cork, 2016.
Samborska, K., Gajek, P. & Kaminska-Dworznicka, A., Sprau drying of honey, The effect of drying agents on powder properties, Pol. J., Food Nutr. Sci, 65(2) 109-118, (2015).

## Claims

1. A food application comprising instant colloidal whole oat flour dry mixed with natural malt enzymes or microbial enzymes, wherein the mixture is hydrolysable in cold enzyme hydrolysis.

2. The food application according to claim 1, **characterized in** being in the form of a whole oat drink, where natural enzyme active malt extract is used for cold hydrolysing both starch and beta glucan, and where natural oat beta glucan of the instant colloidal whole oat flour is used to create the mouthfeel instead of external hydrocolloids.

3. The food application according to claim 2, **characterized in** further comprising dry fine berry or fruit flour, cacao, coffee, dried yoghurt, weak acids or aromas.

4. The food application according to claim 2 or 3, **characterized in** being a berry or fruit drink, a cacao drink, a coffee adjunct or a yoghurt drink, or a base for protein drink, fermented yoghurt, ice cream, baking or cooking.

5. The food application according to claim 1, **characterized in** being in the form of an instant dry whole oat powder, where starch and beta glucan components of the whole oat flour are available for the enzymes and where microbial enzymes are mixed into the dry oat powder for hydrolysing both beta glucan and starch to decrease the viscosity.

6. The food application according to claim 5, **characterized in that** natural diastatic enzyme active malt extract is mixed into the dry oat powder for cold hydrolysing both starch and beta glucan of the instant colloidal whole oat flour to decrease the viscosity.

7. The food application according to claim 5 or 6, **characterized in** further comprising dry fine berry or fruit flour, cacao, coffee, dried yoghurt, weak acids or aromas.

8. The food application according to any of claims 5 to 7, **characterized in** being a berry or fruit powder, cacao powder, coffee adjunct, dry yogurt powder or protein powder, or a base for an oat-based protein drink powder or recovery drink powder, or a milk powder extender.

9. A food application comprising instant colloidal whole oat flour as a structural component.

10. The food application according to claim 9, **characterized in** being in the form of a sweet or salty whole oat spread, which contains only whole oats, and does not contain nuts or palm oil.

11. The food application according to claim 9 or 10, **characterized in** having non-sandy mouthfeel.

12. The food application according to any of claims 9 to 11, **characterized in** further comprising a solid fat ingredient having melting point of below 37 °C, cacao, fine berry of fruit flour with corresponding aromas.

13. The food application according to any of claims 9 to 12, **characterized in** further comprising sweeteners such as sugar or hydrophilic ingredients that melt in the mouth, such as maltodextrin, fine resistant starches or fine carboxymethyl cellulose, or salt.

14. The food application according to any of claims 9 to 13, **characterized in** having moisture originated only from dry raw materials.

15. The food application according to claim 9, **characterized in** being in the form of a soup or a dry soup powder, where the thickening of the soup is completely achieved with instant colloidal whole oat flour.

16. The food application according to claim 15, **characterized in that** the concentration of the instant colloidal whole oat flour is 3-7 wt-% in the water component of the soup or dry soup powder.

17. The food application according to claim 9, **characterized in** being in the form of a spoon-able whole oat dessert and/or filling, additionally containing fruit or berry juice concentrates or honey or other syrups.

18. The food application according to claim 17, **characterized in that** the concentration of the instant colloidal whole oat flour is 5-10 wt-%.

19. The food application according to claim 9, **characterized in** being in the form of a creamy milk, where cream texture of the milk is completely achieved with beta glucan component of the instant colloidal whole oat flour.

20. The food application according to claim 19, **characterized in that** the concentration of the instant colloidal whole oat flour is 3-5 wt-%, preferably added to milk that does not contain lipase activity, such as ultra-high temperature processed milk.

21. Use of instant colloidal whole oat flour for drying of syrups by:
- mixing together instant colloidal whole oat flour and juice concentrate(s),
- letting the mixture to stand for a pre-determined time,
- drying the mixture with heat for obtaining dried oat-syrup granules,
- cooling the dried oat-syrup granule batches in ambient temperature at normal room relative humidity, and
- packing the oat-syrup granule batches into an air-tight bag or pouch.
